# EUROPÄISCHE PATENTSCHRIFT

(11) **EP 2 949 841 B1**
(45) Veröffentlichungstag und Bekanntmachung des Hinweises auf die Patenterteilung: **19.09.2018**
(21) Anmeldenummer: 15166657.5
(22) Anmeldetag: 06.05.2015
(51) Int. Cl.: E05B 67/00, E05B 15/00, E05B 9/00, F16M 11/04, F16M 11/14, E05B 71/00

(54) **FALTSCHLOSS UND HALTEEINRICHTUNG HIERFÜR**
FOLDING LOCK AND HOLDING DEVICE FOR SAME
ANTIVOL PLIABLE ET DISPOSITIF DE FIXATION ASSOCIÉ

(30) Priorität: 09.05.2014 DE 202014102172 U
(43) Veröffentlichungstag der Anmeldung: 02.12.2015
(73) Patentinhaber: ZEG Zweirad-Einkaufs-Genossenschaft eG, 50739 Köln (DE)
(72) Erfinder: Plath, Daniel, 50678 Köln (DE); Koch, Johannes Günther, 50677 Köln (DE)
(74) Vertreter: Althaus, Arndt

(56) Entgegenhaltungen:
- DE-A1- 19 811 246
- DE-A1-102010 036 636
- DE-C1- 3 830 422
- DE-C1- 10 104 850
- FR-A- 1 064 065
- JP-A- H08 144 604
- US-A- 3 908 414
- US-A1- 2005 151 040
- US-A1- 2007 277 569
- US-A1- 2014 028 243
- US-B1- 6 820 448

## Beschreibung

Die Erfindung betrifft ein Faltschloss insbesondere zur Diebstahlsicherung von Zweiradfahrzeugen, mit einem eine Schließwerkseinheit aufnehmenden Schlosskörper und einem mittels mehrerer gelenkig über Gelenkbolzen miteinander verbundener Bügelsegmente gebildeten Faltbügel, wobei ein erstes endständiges Bügelsegment fest mit dem Schlosskörper verbunden ist und ein zweites endständiges Bügelsegment des Faltbügels einen Schließstab bildet, der an seinem freien Bügelende mit einem Riegelelement versehen ist, das zum Zusammenwirken mit der Schließwerkseinheit in eine seitlich am Schlosskörper ausgebildete Riegelaufnahme einschwenkbar ist. Die Erfindung betrifft ferner eine Halteeinrichtung zur Halterung von Schlössern, insbesondere Faltschlössern, an Fahrzeugen wie vor allem Zweiradfahrzeugen, mit einem schlossseitigen Halteelement und einem fahrzeugseitigen Halteelement.

Faltschlösser sind derzeit im Markt vor allem in zwei unterschiedlichen Bauarten erhältlich. Die eine Bauart von Faltschlössern entspricht den aus der DE 10 2005 063 514 B4 bekannten Faltschlössern, bei welchen das erste endständige Bügelsegment zwar fest aber um die Längsachse des Schlosskörpers drehbar mit dem Schlosskörper verbunden ist, während das zweite endständige Bügelsegment des Faltstabs mit seiner Stirnseite in eine seitliche zur Stirnseite des Schlosskörpers geschlossene Aufnahme im Schlosskörper parallel zur Längsachse des Schließstabes eingeschoben wird. Beim Einschieben des Schließstabes können hierbei nicht sämtliche Bügelsegmente in der Transportstellung liegen, sondern wenigstens zwei Bügelsegmente müssen gegenüber der Transportstellung verschwenkt liegen. Auf die Drehbarkeit zwischen dem ersten Bügelsegment und dem Schlosskörper kann bei dieser Bauart auch verzichtet werden, wie die DE 10 2009 026 058 B3 zeigt.

Die US 6,820,448 B1 zeigt ebenfalls ein Faltschloss gemäß der ersten Bauart. Die Bügelsegmente dieses Faltschloss erstrecken sich über die gesamte Breite des den Schlosskörper aufweisenden Bügelsegments, so dass die einzelnen Bügelsegmente zwar in der Transportstellung parallel zueinander, aber übereinander liegen, weswegen sich das Faltschloss zwangsläufig in geöffnetem Zustand befinden muss. Für die Mitnahme während der Fahrt an einem Fahrradrahmen ist ein solches Schloss nicht geeignet.

Bei einer zweiten Bauart von Faltschlössen, wie sie beispielsweise die DE 10 2011 000 240 A1 zeigt, ist das erste endständige Bügelsegment drehfest mit dem Schlosskörper verbunden und das zweite endständige, bewegliche Bügelsegment weist einen seitlich an diesem Bügelsegment vorspringenden Riegelzapfen auf, der in eine seitliche, stirnseitig des Schlosskörpers offenen Öffnung am Schlosskörper einschwenkbar ist. Das Schließen dieses Faltschlosses kann stattfinden, wenn sämtliche Bügelsegmente mit Ausnahme des Schließstabs sich bereits in der Transportstellung befinden, mithin die jeweiligen Gelenkachsen zwischen den einzelnen Bügelsegmenten fluchtend auf einer Linie liegen. Bei einem Faltschloss nach der DE 10 2011 000 240 A1 bestehen das erste, feste endständige Bügelsegment und der Schlosskörper aus separaten Teilen, die zum Einen über die Schließwerkseinheit und zum Anderen über eine Kunststoffummantelung untereinander befestigt sind.

Die DE 10 2010 036 636 A1 zeigt ebenfalls ein Faltschloss gemäß der zweiten Bauart. Das erste Bügelsegment erstreckt sich über eine deutlich kürzere Länge als alle anderen Bügelsegmente. Die Schließwerkseinheit ist mit einem Zahlenschloss versehen und die Verriegelung/Entsperrung des Schließstabs wird über einen längsverschieblichen Freigabestift bewirkt.

Die Faltschlösser beider Bauarten werden zusammen mit separaten Taschen vertrieben, die entweder über gewöhnliche Schrauben mit den am Fahrradrahmen für Flaschenhalterungen vorgesehenen Gewindebohrungen verschraubt sind oder aber separat vom Fahrzeugführer des Fahrrades mitgeführt werden müssen. Die Taschen bestehen meist aus Kunststoff, wobei mit zunehmender Nutzungsdauer das Bewegungsspiel zwischen den Faltstäben und der Tasche zunimmt, was zu Klappergeräuschen während der Fahrt führen kann.

Die US 2007/0277569 A1 zeigt ein Schloss mit einem Faltbügel, welches anstelle einer Pedale immer fest an einem Fahrrad angeordnet ist. Damit der Faltbügel zugleich die Pedale bilden kann, sind die benachbarte Bügelsegmente gegensinnig gekrümmt; im Öffnungszustand können dann alle Bügelsegmente einen Kreis bilden, mit dem beispielsweise eine Laterne umgriffen werden kann. Der Doppelnutzen des Schlosses auch als Pedale begrenzt den Anwendungsbereich auf solche Fahrräder, bei denen keine Klickpedalen verwendet werden sollen. Gleichzeitig können die einzelnen Bügelsegmente nur sehr geringe Querschnitte erhalten.

Bei Bügelschlössern ist es beispielsweise aus der DE 38 30 422 C1 bekannt, eine Halteeinrichtung vorzusehen, die im Schließzustand einerseits den Schlosskörper aufnimmt und gleichzeitig von einem der beiden Bügel durchgegriffen wird, sodass das Bügelschloss jederzeit mitgeführt werden kann.

Aufgabe der Erfindung ist es, ein Faltschloss insbesondere zur Diebstahlsicherung von Zweiradfahrzeugen zu schaffen, welches die Nachteile der bekannten Faltschlösser vermeidet, hohe Gebrauchssicherheit bietet, gut herstellbar ist und bequem und sicher an einem Fahrzeug mitführbar ist.

Zur Lösung dieser Aufgabe wird die in Anspruch 1 angegebene Erfindung vorgeschlagen. Der Schlosskörper und das erste endständige Bügelsegment sind integraler Bestandteil eines Gussteils, der Schlosskörper bzw. das erste endständige Bügelsegment sind mit wenigstens einer Querstrebe versehen sind, die eine Anlagefläche für die Bügelsegmente des Faltstabs des Faltschlosses in einer Transportstellung des Faltschlosses, in der sämtliche Bügelsegmente mit ihren Längsachsen parallel zueinander stehen, bildet. Das erste endständige Bügelsegment ist mithin drehfest mit dem Schlosskörper verbunden und zugleich innig an diesem festgelegt, so dass keine Schwachstelle zwischen erstem endständigen Bügelsegment und Schlosskörper für einen möglichen Manipulationsversuch am Faltschloss entsteht. Gemäß einer bevorzugten Ausgestaltung wird am Schlosskörper oder am Bügelsegment über eine Querstrebe ein Montageplatz für ein Halteelement geschaffen, mit welchem das Faltschloss lösbar an einem Fahrzeug befestigt werden kann. Bei integralem Schlosskörper und endständigem Bügelsegment kann mithin mit der Querstrebe eine Rückwand einer Aufnahmetasche oder Aufnahmeeinrichtung unmittelbar am Faltschloss geschaffen werden, wodurch eine separate Tasche, wie sie bisher bei Faltschlössern, die am Fahrzeug mitgeführt werden sollten, üblich war, entfallen kann. Die integrale Tasche bzw. Rückwand einer Tasche lässt sich an einem Faltschloss besonders vorteilhaft erreichen, wenn auch die Querstrebe integraler Bestandteil des den Schlosskörper und das Bügelsegment aufweisenden bzw. bildenden Gussteils ist.

Weiter vorteilhaft ist, wenn die Querstrebe als Bodenplatte ausgebildet ist und entlang einer Unterkante des ersten, festen endständigen Bügelsegments und des Schlosskörpers an diesen vorzugsweise integral angeschlossen ist. Die Bodenplatte kann durchaus von Durchbrechungen unterbrochen sein, denn die Querstrebe bzw. Bodenplatte dient dann einerseits zur Aufnahme des Halteelementes und andererseits als Rückwand einer integral am Faltschloss ausgebildeten Tasche für die einzelnen Bügelsegmente.

Bei einer insbesondere vorteilhaften Ausgestaltung sind die beweglichen Bügelsegmente stabförmig ausgebildet, wobei die Stablängsachsen der beweglichen Bügelsegmente senkrecht zur Gelenkachse der Gelenkbolzen verlaufen. Besonders vorteilhaft ist dann, wenn die Bodenplatte eine dem ersten, festen Bügelsegment gegenüberliegende Randkante aufweist, die schräg zu den Längsachsen der beweglichen Bügelsegmente verläuft. Die Bodenplatte, bzw. der Quersteg, kann dann zwar eine Anlagefläche für sämtliche Bügelsegmente bilden, zugleich ist allerdings sichergestellt, dass der Schließstab jedenfalls im Bereich des Schlosskörpers vollflächig die Stirnseite des Schlosskörpers verdecken kann, wozu über die schräge Randkante der Bodenplatte entsprechend Freiraum für einen vergrößerten Kopf im Bereich des Schließstabes geschaffen wird.

Gemäß einer weiteren Ausgestaltung kann jedes Bügelsegment mit wenigstens einem Magnetkörper zur Lagefixierung benachbarter Bügelsegmente insbesondere in einer Transportstellung des Faltschlossen, in der sämtliche Bügelsegmente mit ihren Längsachsen parallel zueinander stehen, versehen sein. Über die Magnetkörper wird mithin erreicht, dass die einzelnen Bügelsegmente selbst bei größeren Vibrationen in ihrer für die Transportstellung erforderlichen Parallelstellung zueinander verbleiben, und vor allem auch dann in dieser Stellung bleiben, wenn ein solches Schloss bei eingeriegeltem Schließstab entnommen wird. Bei Faltschlössern führen die Magnetkörper zu dem Vorteil, dass auch denn, wenn ein solches Faltschloss aus einer Tasche herausgenommen wird, keine Gefahr besteht, dass die einzelnen Bügelsegmente plötzlich nach unten fallen und hierbei Beschädigungen beispielsweise am Fahrzeugrahmen oder Verletzungen an Körperteilen des Bedieners hervorrufen. Bügelsegmente mit wenigstens einem Magnetkörper zur Lagefixierung benachbarter Bügelsegmente könnten mithin bei jedem Faltschloss mit einer Schließwerkseinheit und einem aus mehreren gelenkig über Gelenkbolzen miteinander verbundenen Bügelsegmente aufweisenden Faltbügel zum Einsatz kommen, unabhängig davon, ob das erste endständige Bügelsegment drehfest oder drehbar mit dem Schlosskörper verbunden ist. Um auch mit Magnetkörpern niedrigen Volumens ausreichend Haltekräfte zu erzeugen, kann jedes Bügelsegment mit, vorzugsweise genau zwei, Supermagneten wie Magneten aus Neodym (NdFeB) oder Samarium-Cobalt (FmCo), oder aus anderen geeigneten Materialien, versehen sein.

Besonders vorteilhaft ist, wenn sämtliche Bügelsegmente, und auch der Schlosskörper, von einer Kunststoffschicht ummantelt sind. Dabei ist insbesondere vorteilhaft, wenn die Bügelsegmente und der oder die Magnetkörper von einer Kunststoffschicht ummantelt sind, da dann die Kunststoffschicht zugleich die Fixierung der Magnetkörper innerhalb der Bügelsegmente, vor allem innerhalb von Aussparungen in den ansonsten vorzugsweise metallischen, einstückigen Bügelsegmenten übernehmen kann.

Weiter vorzugsweise ist die Schließwerkseinheit von der der Riegelaufnahme entfernt liegenden Rückseite in den Schlosskörper einsetzbar oder eingesetzt und mittels eines Halterahmens im Schlosskörper arretiert, welcher von der mit der Riegelaufnahme versehenen Frontseite aus mit dem Schlosskörper verschraubt ist. Eine solche Ausgestaltung sorgt wiederum für hohe Manipulationssicherheit gegenüber Aufbrauchsversuchen am Faltschloss.

Um eine innige Befestigung des Faltschlosses an einem Fahrzeug zu erreichen, die zugleich schnell lösbar ist, ist insbesondere vorteilhaft, wenn das Halteelement zur Halterung des Schlosses am Fahrzeug schlossseitig ein einer Einstecköffnung zugeordnetes, elastisch verformbares, kugelpfannenartiges Kupplungsteil aufweist, das mit einem fahrzeugseitig anbringbaren oder angebrachten, im Riegelzustand in die Einstecköffnung einfassenden Kugelkopf lösbar verbindbar ist. Besonders zweckmäßig ist dabei, wenn schlossseitig zwei Kupplungsteile und fahrzeugseitig zwei Kugelköpfe vorgesehen sind, wobei vorzugsweise die Kugelköpfe mittels integral mit den Kugelköpfen jeweils verbundener Gewindestifte in Gewindebohrungen an einem Zweiradrahmen, oder Fahrzeugrahmen, einschraubbar sind.

Die Erfindung betrifft entsprechend auch eine Halteeinrichtung zur Halterung von erfindungsgemäßen Faltschlössern der vorgenannten Bauart mit einem schlossseitigen Halteelement und einem fahrzeugseitigen Halteelement, wobei erfindungsgemäß das fahrzeugseitige Halteelement einen Kugelkopf aufweist und das schlossseitige Halteelement ein einer Einstecköffnung am Schloss zugeordnetes, elastisch verformbares, kugelpfannenartiges Kupplungsteil aufweist, das mit dem im Riegelzustand in die Einstecköffnung einfassenden Kugelkopf lösbar verbindbar ist.

Weitere Vorteile und Ausgestaltungen eines erfindungsgemäßen Faltschlosses nebst Halteeinrichtung ergeben sich aus der nachfolgenden Beschreibung eines schematisch in der Zeichnung gezeigten Ausführungsbeispiels. In der Zeichnung zeigen:
- **Fig. 1**: in perspektivischer Ansicht ein erfindungsgemäßes Faltschloss zur Arretierung an einem hierzu ausgestatteten Rahmenelement beispielsweise eines Fahrrades;
- **Fig. 2**: eine Draufsicht auf ein erfindungsgemäßes Faltschloss in Transportstellung mit zusammengefaltetem Faltbügel;
- **Fig. 3**: eine Ansicht auf die Rückseite des Faltschlosses aus Fig. 2;
- **Fig. 4**: in perspektivischer Ansicht das Faltschloss im Schließzustand mit auseinander gefaltetem Faltbügel;
- **Fig. 5**: das Faltschloss in ähnlicher Ansicht wie in Fig. 4 mit entriegeltem Schließstab;
- **Fig. 6**: eine Explosionsdarstellung eines erfindungsgemäßen Faltschlosses;
- **Fig. 7**: ein einzelnes Bügelsegment im Längsschnitt;
- **Fig. 8A,8B**: das vom Gußteil gebildete Schlossgehäuse nebst erstem endständigen Bügelsegment in unterschiedlichen perspektivischer Ansichten; und
- **Fig. 9**: einen Halterahmen zur Arretierung der Schließwerkseinheit im Schlosskörper in perspektivischer Ansicht.

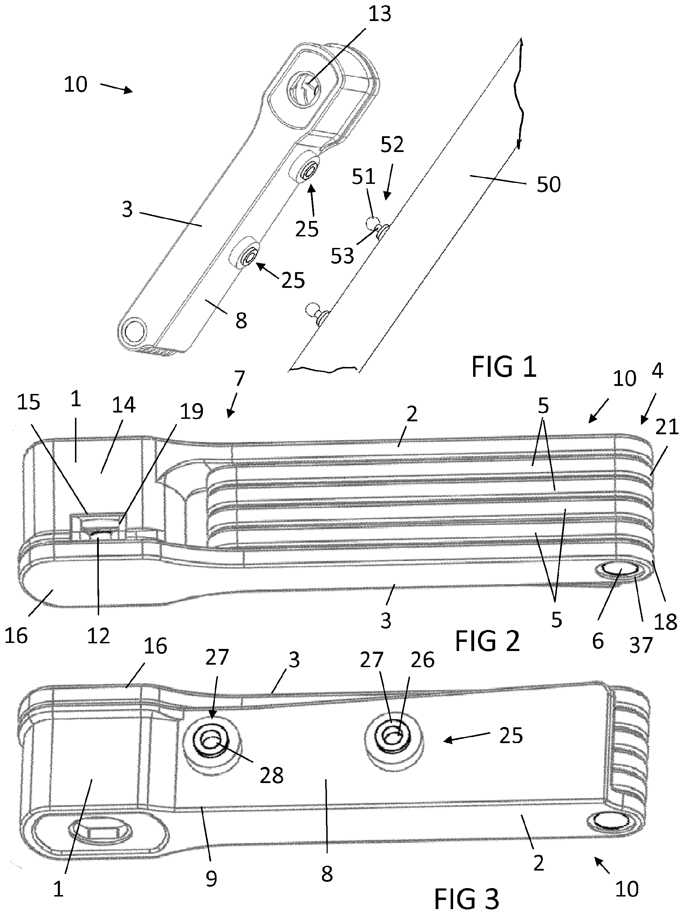

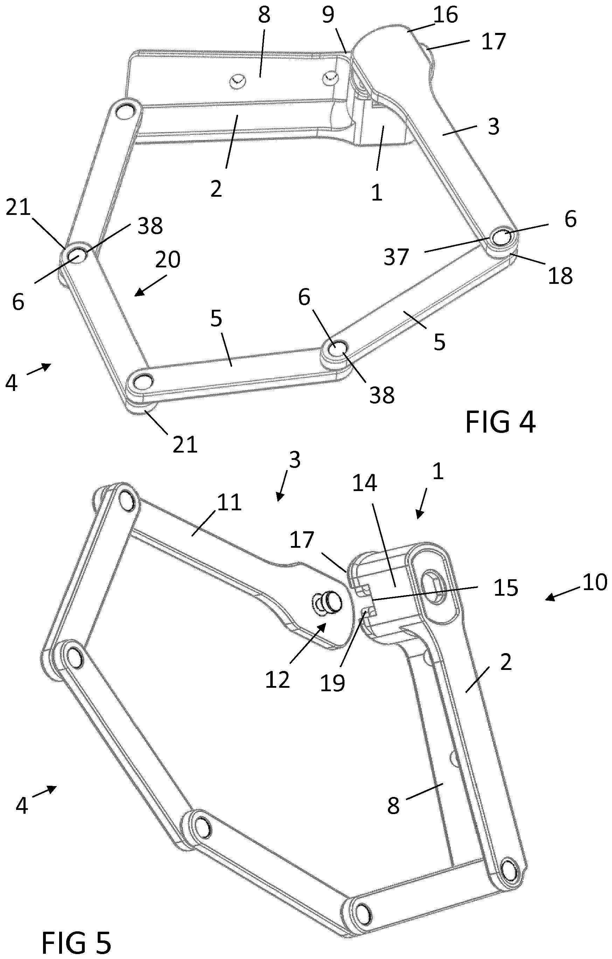

In den Figuren ist insgesamt mit Bezugszeichen 10 ein erfindungsgemäßes Fahrradschloss bezeichnet, welches, wie insbesondere die Fig. 2 bis 6 zeigen, als wesentliche Bestandteile einen Schlosskörper 1, ein erstes mit dem Schlosskörper 1 verbundenes endständiges Bügelsegment 2, ein zweites, endständiges und einen Schließstab 3 bildendes Bügelsegment sowie einen Faltbügel 4 umfasst, der im gezeigten Ausführungsbeispiel aus vier Bügelsegmenten 5 besteht, die jeweils über einen Gelenkbolzen 6 entweder mit einem Bolzenauge 38 eines benachbarten Bügelsegment 5 oder mit einem Bolzenauge 36 am ersten endständigen Bügelsegment 2 oder mit einem Bolzenauge 37 am Schließstab 3 verbunden sind. Das erste endständige Bügelsegment 2 ist nicht nur drehfest mit dem Schlosskörper 1 verbunden, sondern gemäß der bevorzugten Ausgestaltung im gezeigten Ausführungsbeispiel integraler Bestandteil eines Gussteils 7, welches sowohl den Schlosskörper 1, das erste endständige Bügelsegment 2 als auch eine Bodenplatte 8 bildet, welche sich, wie insbesondere die Fig. 1, 3, 4 und 8 zeigen, rechtwinklig zum ersten endständigen Bügelsegment 2 erstreckt und im Wesentlichen an dessen Unterkante 9 bzw. der Unterkante des Schlosskörpers 1 an diesen angeschlossen ist. Die einzelnen Bügelsegmente 5 haben untereinander den gleichen Aufbau und die gleiche Länge. Bei einem gebrauchsfertigen Faltschloss 10, wie in den Fig. 1 bis 6 gezeigt, sind vorzugsweise sämtliche Bügelsegmente 5 als auch das Gußteil 7 mit einer im Einzelnen nicht dargestellten Kunststoffschicht ummantelt, um metallischen Kontakt zwischen dem Faltschloss 10 einerseits und einer Rahmenstrebe 50 eines Fahrrades, wie in Fig. 1 gezeigt, oder anderen Bauteilen eines Fahrzeugs zu vermeiden. Das zweite endständige Bügelsegment, welches den Schließstab 3 des Faltschlosses 10 bildet, weist an seiner dem ersten endständigen Bügelsegment 2 zugewandt liegenden Seitenflanke 11, wie insbesondere Fig. 5 zeigt, einen Riegelzapfen 12 als Riegelelement zum Zusammenwirken mit einer Schließwerkeinheit 13 auf, die im Innern des Schlosskörpers 1 angeordnet ist und nur schematisch in Fig. 1 angedeutet ist. Zum Einrasten und Verankern des Riegelelements 12 in die Schließwerkeinheit ist der Schlosskörper 1 mit einer an der Oberseite 14 und der Stirnseite 17 des Schlosskörpers 1 randoffenen Riegelaufnahme 15 versehen, in welche, wie vor allem Fig. 2 erkennen lässt, der Schließstab 3 mit dem Riegelzapfen 12 durch eine reine Schwenkbewegung eingeschwenkt bzw. herausgeschwenkt werden kann, auch wenn sämtliche weiteren, beweglichen Bügelsegmente 5 und das fest am Schlosskörper 1 angeordnete erste endständige Bügelsegment 2 parallel zueinander liegen. Der Riegelzapfen 12 befindet sich hier mittig im Bereich eines verbreiterten Kopfabschnitts 16 des Schließstabs 3, wobei der Querschnitt des Kopfabschnitts 16 im Wesentlichen an den Querschnitt des Schlosskörpers 1 an dessen Stirnseite 17 angepasst ausgebildet ist, wie gut die Fig. 1 und 4 erkennen lassen. Durch diese Ausgestaltung deckt im Riegelzustand, wie in Fig. 2 gezeigt, wobei dieser Riegelzustand zugleich eine Transportstellung für das Faltschloss 10 bildet, der Kopfabschnitt 16 des Schließstabs 3 die Stirnseite 17 des Schlosskörpers 1 vollständig ab. Im gezeigten Ausführungsbeispiel ragt der Kopfabschnitt 16 sogar umlaufend über die Seitenflanken des Schlosskörpers 1 geringfügig hinaus.

Der Schließstab 3 weist nur an seiner dem verbreiterten Kopfabschnitt 16 entfernt liegenden freien Ende 18 integral eine abgesenkte Bolzenaufnahme 37 für einen Gelenkbolzen 6 auf, über den der Schließstab 3 dann mit dem nächstfolgenden Bügelsegment 5 gelenkig verbunden ist, wobei bei dieser Gelenkverbindung auch das Einschwenken des Schließstabs 3 mit dem Riegelzapfen 12 in die Aufnahme 15 bei zusammengefaltetem Faltbügel 4 ermöglicht wird. Um das Einschwenken zu erleichtern, kann die in der Transportstellung dem Gelenkbolzen 6 näher zugewandt liegende Flanke 19 der Riegelaufnahme 15 gerundet ausgebildet sein, wobei vorzugsweise beide Flanken 19 der Riegelaufnahme 15 mit Radien versehen sind, wie vor allem Fig. 5 gut erkennen lässt, um das Einführen des Gelenkzapfens 12 durch die Riegelaufnahme 15 hindurch in die Schließwerkseinheit zu erleichtern.

Wie die Fig. 1 bis 6 weiter gut erkennen lassen, bildet die Bodenplatte 8 nicht nur eine Anlagefläche für die einzelnen Bügelsegmente 5 des Faltbügels 4, sondern die Bodenplatte 8 bildet zugleich auch Bestandteil eines teilweise offenen Gehäuses für den Faltbügel 4 und außerdem Teil einer Befestigungseinrichtung, um das Faltschloss 10 an einem Rahmenelement (50, Fig. 1) eines Fahrzeuges, wie insbesondere der Rahmenstrebe eines Fahrrades, lösbar verankern zu können. Im gezeigten Ausführungsbeispiel sind hierzu am Rahmenelement 50, vorzugsweise in zwei Gewindebohrungen beispielsweise an der Sattelstange oder am Unterrohr, in welchen Bohrungen ggf. auch andere Anbauteile wie beispielsweise ein Trinkflaschenhalter angebracht werden können, zwei jeweils mit einem Kugelkopf 51 versehene fahrzeugseitige Halteelemente 52 befestigt. Das fahrzeugseitige Halteelement 52 ist äußerst einfach aufgebaut und besteht im Wesentlichen nur aus dem Kugelkopf 51 mit sich hieran anschließendem kurzen Rundschaft 53 sowie einem nach Art einer Stockschraube ausgebildeten Gewindeschaft (nicht gezeigt) mit Außengewinde, über den das fahrzeugseitige Halteelement 52 jeweils in eine entsprechende Gewindebohrung mit passendem Innengewinde eingeschraubt werden kann. Entsprechende Gewinde bzw. Gewindebohrungen haben bei Fahrrädern im Regelfall ein Gewinde M5. Die Kugelköpfe 51 der fahrzeugseitigen Halteelemente 52 wiederum wirken mit schlossseitigen Halteelementen 25 zusammen, die jeweils in der Bodenplatte 8 ausgebildet sind und jeweils eine Einstecköffnung 26 für den Kugelkopf (51, Fig. 1) umfassen, die von einem kugelpfannenartigen, verformbaren Kupplungsteil 27 umgeben ist, wobei im Riegelzustand der Halteelemente 25 und 52 das deformierbare Kupplungsteil 27 mit einem beispielsweise in Fig. 3 gut erkennbar Ringkragen 28 den Kugelkopf 51 hinterfaßt und hierdurch die Bodenplatte 8 und das Faltschloss 10 über die Kugelköpfe 51 am Fahrzeugrahmen 50 verankert. Da paarweise sowohl am Fahrzeugrahmen 50 als auch an der Bodenplatte 8 jeweils ein fahrzeugseitiges Halteelement 52 und ein schlossseitiges Halteelement 25 vorgesehen ist, kann mittels den hier nur zwei Paaren von Halteelementen 52, 25 eine zwar lösbare, aber auch stärkeren Vibrationen standhaltende Verbindung zwischen dem Faltschloss 10 und dem Fahrzeug bzw. dem Fahrzeugrahmen 50 erreicht werden, die bei ausreichender Streifigkeit insbesondere der Kupplungsteile 27 ein Lösen verhindert. Die Kupplungsteile 27 können hierbei zugleich austauschbar sein, beispielsweise in dem sie über Schraubringe in hülsenartigen Aufnahmen 45 der schlossseitigen Haltelemente gehalten werden, die integral am Gußteil 7 ausgebildet sind oder mittels einer Pressverbindung an der Bodenplatte 8 verankert werden.

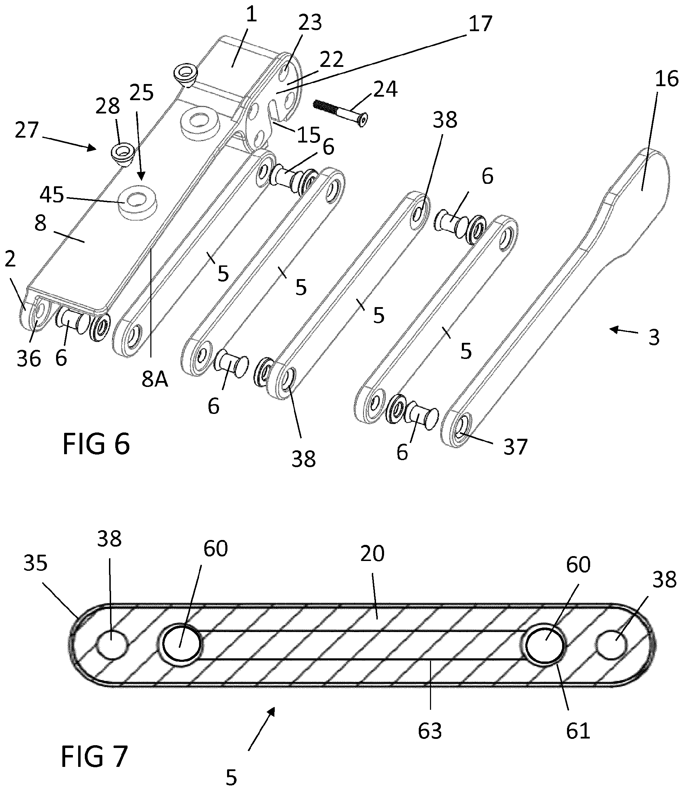

Die Bodenplatte 8 geht an ihrer beispielsweise in Fig. 6 hinteren Begrenzungskante integral in das erste endständige, senkrecht hierzu stehende Bügelsegment 2 über. Die vordere Randkante 8A der Bodenplatte 8 verläuft schräg zu den einzelnen Stab- bzw. Erstreckungsachsen der einzelnen Bügelsegmente 5 und vor allem schräg zur Längsachse des ersten endständigen Bügelsegments 2, wodurch sich die Bodenplatte 8 von den jeweils entfernt des Schlosskörpers 1 liegenden Gelenkbolzen oder Enden auf den Schlosskörper 1 zu geringfügig verjüngt. Auch durch diese Verjüngung wird erreicht, dass der Schließstab 3 in der Schließstellung, wie in Fig. 3 gezeigt, mit dem vergrößerten Kopfabschnitt 16 bis vor die Stirnseite des Schlosskörpers 1 eingeschwenkt werden kann.

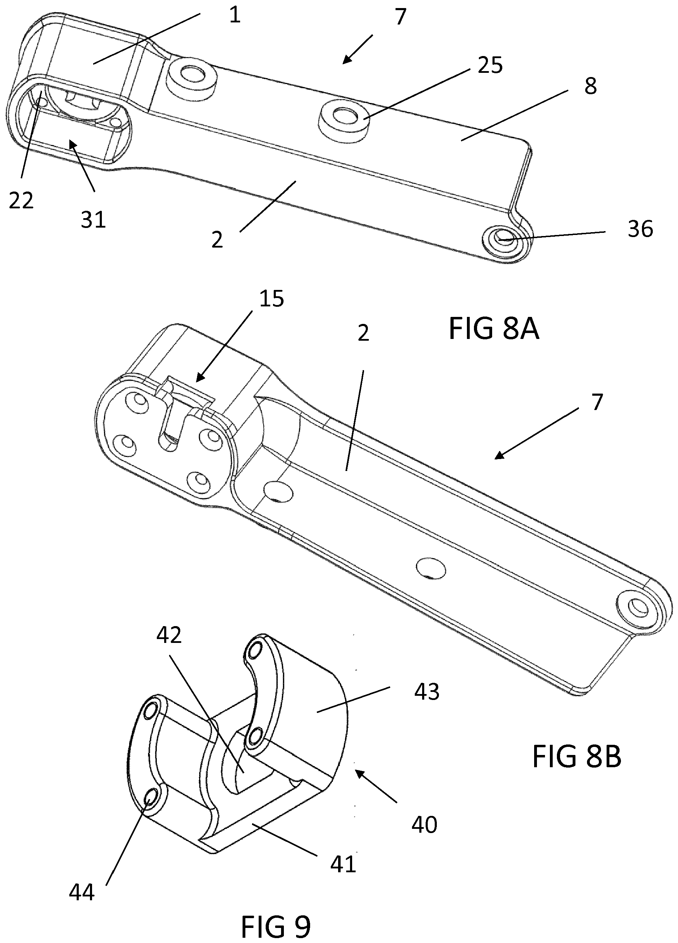

Die Verankerung der im Detail nicht dargestellten Schließwerkseinheit im Schlosskörper 1 erfolgt vorzugsweise von derjenigen Seite des Schlosskörpers 1 aus, an der auch die Riegelaufnahme 15 ausgebildet ist, also von der Stirnseite 17 her, wie insbesondere Fig. 6 gut erkennen lässt. Der Schlosskörper 1 weist hierzu eine von der Riegelaufnahme 15 unterbrochene Bodenwand 22 auf, in der vier Bohrungen 23 ausgebildet sind, durch die Arretierschrauben 24 hindurchsteckbar sind. Die Arretierschrauben 24 wirken hierbei mit einem Halterahmen 40 zusammen, der im Detail in Fig. 9 dargestellt ist und dazu vorgesehen ist, eine Schließwerkseinheit unverlierbar und gegen Manipulationen geschützt im Schlosskörper zu verankern. Der Halterahmen 40 weist entsprechend eine Grundplatte 41 auf, die mit einer zentralen Aussparung 42 versehen ist und in zwei hier nierenförmig gebogenen, über die Grundplatte 41 senkrecht aufragende Seitenschenkel 43 übergeht, wobei die Formgebung der Seitenschenkel 43 und deren Länge an die Tiefe einer sachlochartigen Vertiefung 31 im Innern des Schlosskörpers 1 angepasst ist. Die beiden Seitenschenkel 43 sind entsprechend mit vier Gewindebohrungen 44 versehen, in welche durch die Bodenwand 22 hindurch der Halterahmen 40 derart mittels der Arretierschrauben 24 innerhalb der Vertiefung 31 im Schlosskörper 1 verankert werden kann, dass im Montagezustand die Unterseite der Grundplatte 41 bündig mit der Rückseite des Schlosskörpers 1 abschließt, und damit auch bündig mit der Rückseite des festen Bügelsegment 2 abschließt.

Die Vertiefung 31 ist am besten in Fig. 8A zu sehen. Die Fig. 8A und 8B lassen ferner gut erkennen, dass die Bodenwand 22 eine gewisse Dicke haben kann, um die Schließwerkseinheit mit ausreichender Festigkeit und Manipulationssicherheit im Schlosskörper 1 zu verankern.

Aus Fig. 7 ist auch der innere Aufbau der Bügelsegmente 5 bzw. des ersten, festen endständigen Bügelsegments bei Faltschlössern gemäß einer insbesondere bevorzugten Ausgestaltung ersichtlich. Gemäß dieser bevorzugten Ausgestaltung können nämlich sowohl in sämtlichen Bügelsegmenten 5 als auch mindestens im endständigen, festen Bügelsegment jeweils Magnetelemente 60 angeordnet werden, wozu das Bügelsegment 5 zwischen den Bolzenaufnahmen 38 für die Gelenkbolzen (6, Fig. 6) jeweils zwei hier kreisförmige Aufnahmeaussparungen 61 aufweist, in die jeweils ein Magnetkörper 60, vorzugsweise ein Supermagnet aus Neodym, eingesetzt werden kann, die bei einem fertigen Faltschloss zusammen mit dem metallischen Stabelementinnteil 20 von einer Kunststoffschicht 35 ummantelt sind und daher von außen nicht erkennbar sind. Auch das den Schließstab bildende endständige Bügelsegment kann entsprechende kreisförmige Aussparungen aufweisen (nicht gezeigt), um entsprechend Magnete, insbesondere Supermagnete aufzunehmen. Über entsprechende Magnetkörper 60 kann sichergestellt werden, dass die einzelnen Bügelsegmente 5, wenn sie sich in der Transportstellung, wie in Fig. 2 gezeigt, befinden, auch durch die Magnetkräfte in dieser Stellung gehalten werden, und zwar nicht nur, wenn die Bügelsegmente schwerkraftbedingt an der Bodenplatte 8 anliegen, sondern immer dann, wenn zwei Bügelsegmente 5 oder ein Bügelsegment 5 und der Schließstab 3 oder das erste endständige Bügelsegment 2 parallel zueinander liegen.

Die Erfindung ist nicht auf das gezeigte Ausführungsbeispiel beschränkt. Das Ausführungsbeispiel dient nur zur Verdeutlichung des Erfindungsgedankens sowie des grundlegenden Aufbaus eines erfindungsgemäßen Faltschlosses. Die Formgebung und insbesondere Länge der einzelnen Bügelsegmente kann vielfältig variieren. Gleiches gilt für die Formgebung des Schlosskörpers und die Formgebung der Bodenplatte. Die Bodenplatte kann mit Aussparungen annähernd beliebiger Konstruktion versehen sein, die zum Einen dekorativen Charakter haben können, zugleich auch eine Gewichtserleichterung bilden, ohne die Funktion als Bodenplatte und Anlagefläche einzuschränken. Im Prinzip reicht es aus, anstelle einer durchgehenden Bodenplatte von dem fest mit dem Schlosskörper verbundenen Bügelsegment eine oder mehrere Querstreben vorragen zu lassen, wobei an einigen dieser Querstreben dann wiederum die Halteelemente zur Halterung des Faltschlosses am Fahrradrahmen, wie zuvor beschrieben, ausgebildet werden können. Solche und weitere Modifikationen sollen in den Schutzbereich der anhängenden Ansprüche fallen.

## Patentansprüche

1. Faltschloss insbesondere zur Diebstahlsicherung von Zweiradfahrzeugen, mit einem eine Schließwerkseinheit (13) aufnehmenden Schlosskörper (1) und einem mittels mehrerer gelenkig über Gelenkbolzen (6) miteinander verbundener Bügelsegmente (5) gebildeten Faltbügel (4), wobei ein erstes endständiges Bügelsegment (2) fest mit dem Schlosskörper (1) verbunden ist und ein zweites endständiges Bügelsegment des Faltbügels einen Schließstab (3) bildet, der an seinem freien Bügelende mit einem Riegelelement (12) versehen ist, das zum Zusammenwirken mit der Schließwerkseinheit (13) in eine seitlich am Schlosskörper (1) ausgebildete Riegelaufnahme (15) einschwenkbar ist, **dadurch gekennzeichnet, dass** der Schlosskörper (1) und das erste endständige Bügelsegment (2) integraler Bestandteil eines Gussteils (7) sind, und dass der Schlosskörper (1) mit wenigstens einer Querstrebe versehen ist, die eine Anlagefläche für die Bügelsegmente (5) des Faltschlosses in einer Transportstellung des Faltschlosses, in der sämtliche Bügelsegmente (5) mit ihren Längsachsen parallel zueinander stehen, bildet.

2. Faltschloss nach Anspruch 1, **dadurch gekennzeichnet, dass** die Querstrebe mit dem Schlosskörper (1) und dem ersten, festen Bügelsegment (2) vorzugsweise integral verbunden ist.

3. Faltschloss nach Anspruch 2, **dadurch gekennzeichnet, dass** die Querstrebe integraler Bestandteil des Gussteils ist.

4. Faltschloss nach einem der Ansprüche 1 bis 3, **dadurch gekennzeichnet, dass** die Querstrebe als Bodenplatte (8) ausgebildet ist und entlang einer Unterkante (9) des ersten, festen endständigen Bügelsegments (2) und des Schlosskörpers (1) an diesen vorzugsweise integral angeschlossen ist.

5. Faltschloss nach einem der Ansprüche 1 bis 4, **dadurch gekennzeichnet, dass** die beweglichen Bügelsegmente (5) stabförmig ausgebildet sind, wobei die Stablängsachsen der beweglichen Bügelsegmente (5) senkrecht zur Gelenkachse der Gelenkbolzen (6) verlaufen.

6. Faltschloss nach Anspruch 4 und 5, **dadurch gekennzeichnet, dass** die Bodenplatte (8) eine dem ersten, festen Bügelsegment (2) gegenüberliegende Randkante (8A) aufweist, die schräg zu den Längsachsen der beweglichen Bügelsegmente (5) verläuft.

7. Faltschloss nach einem der Ansprüche 1 bis 6, **dadurch gekennzeichnet, dass** der Schließstab (3) an seinem freien Segmentende einen Kopfteil (16) aufweist, der an den Querschnitt der Außenkontur des Schlosskörpers (1) angepasst ist.

8. Faltschloss nach einem der vorhergehenden Ansprüche, **dadurch gekennzeichnet, dass** die Schließwerkseinheit (13) von der der Riegelaufnahme entfernt liegenden Rückseite in den Schlosskörper einsetzbar oder eingesetzt ist und mittels eines Halterahmens (40) im Schlosskörper arretiert ist, welcher von der mit der Riegelaufnahme versehenen Stirnseite (17) aus mit dem Schlosskörper (1) verschraubt ist.

9. Faltschloss nach einem der Ansprüche 1 bis 8, **dadurch gekennzeichnet, dass** die Querstrebe ein Haltelement (25) zur lösbaren Halterung des Faltschlosses (10) an einem Fahrzeug aufweist.

10. Faltschloss nach Anspruch 9, **dadurch gekennzeichnet, dass** das Halteelement (25; 52) zur Halterung des Schlosses an einem Fahrzeug schlossseitig ein einer Einstecköffnung am Schloss zugeordnetes, elastisch verformbares, kugelpfannenartiges Kupplungsteil (27) aufweist, das mit einem fahrzeugseitig anbringbaren oder angebrachten, im Riegelzustand in die Einstecköffnung einfassenden Kugelkopf (51) lösbar verbindbar ist.

11. Halteeinrichtung mit einem schlossseitigen Halteelement und einem fahrzeugseitigen Halteelement zur Halterung von Faltschlössern gemäß Anspruch 1, die mit einem eine Schließwerkseinheit (13) aufnehmenden Schlosskörper (1) und einem mittels mehrerer gelenkig über Gelenkbolzen (6) miteinander verbundener Bügelsegmente (5) gebildeten Faltbügel (4) versehen sind, wobei ein erstes endständiges Bügelsegment (2) fest mit dem Schlosskörper (1) verbunden ist und ein zweites endständiges Bügelsegment des Faltbügels einen Schließstab (3) bildet, der an seinem freien Bügelende mit einem Riegelelement (12) versehen ist, das zum Zusammenwirken mit der Schließwerkseinheit (13) in eine seitlich am Schlosskörper (1) ausgebildete Riegelaufnahme (15) einschwenkbar ist, wobei der Schlosskörper (1) und das erste endständige Bügelsegment (2) integraler Bestandteil eines Gussteils (7) sind, und wobei der Schlosskörper (1) mit wenigstens einer Querstrebe versehen ist, die eine Anlagefläche für die Bügelsegmente (5) des Faltschlosses in einer Transportstellung des Faltschlosses, in der sämtliche Bügelsegmente (5) mit ihren Längsachsen parallel zueinander stehen, bildet, **dadurch gekennzeichnet, dass** das fahrzeugseitige Haltelement (52) einen Kugelkopf (51) aufweist und das schlossseitige Haltelement (25) ein einer Einstecköffnung in der Querstrebe des Schlosskörpers des Schlosses zugeordnetes, elastisch verformbares, kugelpfannenartiges Kupplungsteil (27) aufweist, das mit dem im Riegelzustand in die Einstecköffnung einfassenden Kugelkopf lösbar verbindbar ist.

12. Halteeinrichtung nach Anspruch 11, **dadurch gekennzeichnet, dass** das Faltschloss gemäß einem der Ansprüche 2 bis 10 ausgebildet ist.

13. Faltschloss nach Anspruch 10 oder Halteeinrichtung nach Anspruch 11, **dadurch gekennzeichnet, dass** schlossseitig zwei Kupplungsteile und fahrzeugseitig zwei Kugelköpfe vorgesehen sind.

14. Faltschloss nach Anspruch 13 oder Halteeinrichtung nach Anspruch 13, **dadurch gekennzeichnet, dass** die Kugelköpfe mittels integral mit den Kugelköpfen jeweils verbundener Gewindestiften in Gewindebohrungen an einem Zweiradahmen einschraubbar sind.

## Claims

1. Folding lock, in particular for protecting two-wheeled vehicles from theft, with a lock body (1) accommodating a closing mechanism unit (13) and with a folding bow (4) which is formed by means of a plurality of bow segments (5) which are connected to one another in an articulated manner by hinge pins (6), wherein a first end bow segment (2) is fixedly connected to the lock body (1) and a second end bow segment of the folding bow forms a closing bar (3) which is provided at its free bow end with a locking element (12) which, for interaction with the closing mechanism unit (13), is pivotable into a locking receptacle (15) formed laterally on the lock body (1), **characterized in that** the lock body (1) and the first end bow segment (2) are an integral part of a cast part (7), and **in that** the lock body (1) is provided with at least one transverse strut which forms a contact surface for the bow segments (5) of the folding lock in a transport position of the folding lock, in which the longitudinal axes of all of the bow segments (5) are parallel to one another.

2. Folding lock according to Claim 1, **characterized in that** the transverse strut is preferably connected integrally to the lock body (1) and to the first fixed bow segment (2).

3. Folding lock according to Claim 2, **characterized in that** the transverse strut is an integral part of the cast part.

4. Folding lock according to one of Claims 1 to 3, **characterized in that** the transverse strut is designed as a baseplate (8) and is connected, preferably integrally, to the lock body (1) along a lower edge (9) of the first fixed end bow segment (2) and of the lock body (1).

5. Folding lock according to one of Claims 1 to 4, **characterized in that** the movable bow segments (5) are of bar-shaped design, wherein the bar longitudinal axes of the movable bow segments (5) run perpendicularly to the hinge axis of the hinge pins (6).

6. Folding lock according to Claim 4 and 5, **characterized in that** the baseplate (8) has a border edge (8A) which lies opposite the first fixed bow segment (2) and runs obliquely with respect to the longitudinal axes of the movable bow segments (5).

7. Folding lock according to one of Claims 1 to 6, **characterized in that** the free segment end of the closing bar (3) has a head part (16) which is matched to the cross section of the outer contour of the lock body (1).

8. Folding lock according to one of the preceding claims, **characterized in that** the closing mechanism unit (13) is insertable or inserted into the lock body from the rear side, which is remote from the locking receptacle, and is locked in the lock body by means of a holding frame (40) which is screwed to the lock body (1) from the end side (17) provided with the locking receptacle.

9. Folding lock according to one of Claims 1 to 8, **characterized in that** the transverse strut has a holding element (25) for releasably securing the folding lock (10) to a vehicle.

10. Folding lock according to Claim 9, **characterized in that** the holding element (25; 52) for securing the lock to a vehicle has, on the lock side, an elastically deformable coupling part (27) which is assigned to a plug-in opening on the lock, is in the manner of a ball socket and is releasably connectable to a ball head (51) which is attachable or attached on the vehicle side and, in the locking state, is mounted into the plug-in opening.

11. Holding device with a lock-side holding element and a vehicle-side holding element for securing folding locks according to Claim 1, which are provided with a lock body (1) accommodating a closing mechanism unit (13) and with a folding bow (4) which is formed by means of a plurality of bow segments (5) which are connected to one another in an articulated manner by hinge pins (6), wherein a first end bow segment (2) is fixedly connected to the lock body (1) and a second end bow segment of the folding bow forms a closing bar (3) which is provided at its free bow end with a locking element (12) which, for interaction with the closing mechanism unit (13), is pivotable into a locking receptacle (15) formed laterally on the lock body (1), wherein the lock body (1) and the first end bow segment (2) are an integral part of a cast part (7), and wherein the lock body (1) is provided with at least one transverse strut which forms a contact surface for the bow segments (5) of the folding lock in a transport position of the folding lock, in which the longitudinal axes of all of the bow segments (5) are parallel to one another, **characterized in that** the vehicle-side holding element (52) has a ball head (51) and the lock-side holding element (25) has an elastically deformable coupling part (27) which is assigned to a plug-in opening in the transverse strut of the lock body of the lock, which is in the manner of a ball socket and is releasably connectable to the ball head which, in the locking state, is mounted into the plug-in opening.

12. Holding device according to Claim 11, **characterized in that** the folding lock is designed according to one of Claims 2 to 10.

13. Folding lock according to Claim 10 or holding device according to Claim 11, **characterized in that** two coupling parts are provided on the lock side and two ball heads are provided on the vehicle side.

14. Folding lock according to Claim 13 or holding device according to Claim 13, **characterized in that** the ball heads can be screwed into threaded bores on a bicycle frame by means of threaded pins which are each connected integrally to the ball heads.

## Revendications

1. Boucle déployante notamment pour la sécurité antivol de véhicules à deux roues, avec un corps de serrure (1) accueillant une unité de mécanisme de fermeture (13) et avec un étrier pliant (4) formé à l'aide de plusieurs segments d'étrier (5) reliés entre eux de façon articulée via des goujons articulés (6), un premier segment d'étrier (2) terminal étant relié fixement au corps de serrure (1) et un deuxième segment d'étrier terminal de l'étrier pliant formant une tige de fermeture (3) pourvue d'un élément de verrouillage (12) au niveau de son extrémité d'étrier libre, ledit élément pouvant pivoter vers l'intérieur de façon à interagir avec l'unité de mécanisme de fermeture (13) dans un logement de verrou (15) réalisé en côté au niveau du corps de serrure (1), **caractérisée en ce que** le corps de serrure (1) et le premier segment d'étrier (2) terminal font partie intégrante d'une pièce brute de fonderie (7) et que le corps de serrure (1) est pourvu d'au moins un étai transversal formant une surface d'appui pour les segments d'étrier (5) de la boucle déployante dans une position de transport de la boucle déployante dans laquelle l'ensemble des segments d'étrier (5) s'étendent parallèlement les uns par rapport aux autres avec leurs axes longitudinaux.

2. Boucle déployante selon la revendication 1, **caractérisée en ce que** l'étai transversal est relié de préférence intégralement au corps de serrure (1) et au premier segment d'étrier (2) fixe.

3. Boucle déployante selon la revendication 2, **caractérisée en ce que** l'étai transversal fait partie intégrante de la pièce brute de fonderie.

4. Boucle déployante selon l'une quelconque des revendications 1 à 3, **caractérisée en ce que** l'étai transversal est réalisé sous la forme d'une plaque de sol (8) et est rattaché de préférence intégralement au corps de serrure (1) le long d'une arête inférieure (9) de celui-ci et du premier segment d'étrier (2) terminal fixe.

5. Boucle déployante selon l'une quelconque des revendications 1 à 4, **caractérisée en ce que** les segments d'étrier (5) mobiles sont réalisés en forme de tige, les axes longitudinaux de tige des segments d'étrier (5) mobiles s'étendant perpendiculairement à l'axe articulé du goujon articulé (6).

6. Boucle déployante selon la revendication 4 et 5, **caractérisée en ce que** la plaque de sol (8) comporte une arête de bordure (8A) opposée au premier segment d'étrier (2) fixe et s'étendant de façon oblique par rapport aux axes longitudinaux des segments d'étrier (5) mobiles.

7. Boucle déployante selon l'une quelconque des revendications 1 à 6, **caractérisée en ce que** la tige de fermeture (3) comporte une partie de tête (16) au niveau de son extrémité de segment libre, cette partie de tête étant ajustée, au niveau de la section transversale, au contour extérieur du corps de serrure (1).

8. Boucle déployante selon l'une quelconque des revendications précédentes, **caractérisée en ce que** l'unité de mécanisme de fermeture (13) est insérée ou peut être insérée dans le corps de serrure depuis le côté arrière éloigné du logement de verrou et est bloquée dans le corps de serrure à l'aide d'un cadre de fixation (40) vissé au corps de serrure (1) depuis le côté avant (17) pourvu du logement de verrou.

9. Boucle déployante selon l'une quelconque des revendications 1 à 8, **caractérisée en ce que** l'étai transversal comporte un élément de fixation (25) pour la fixation amovible de la boucle déployante (10) à un véhicule.

10. Boucle déployante selon la revendication 9, **caractérisée en ce que** l'élément de fixation (25 ; 52) comporte, pour la fixation de la serrure à véhicule au niveau du côté de serrure, une partie de couplage (27) de type à logement sphérique déformable de façon élastique associée à une ouverture d'enfichage au niveau de la serrure, ladite partie de couplage pouvant être reliée de façon amovible à une tête sphérique (51) pouvant être amenée ou placée du côté du véhicule et se fermant dans l'état verrouillé dans l'ouverture d'enfichage.

11. Dispositif de fixation avec un élément de fixation placé du côté de serrure et un élément de fixation placé du côté du véhicule pour la fixation de boucles déployantes selon la revendication 1, ces boucles étant pourvues d'un corps de serrure (1) logeant une unité de mécanisme de fermeture (13) et d'un étrier pliant (4) formé à l'aide de plusieurs segments d'étrier (5) reliés entre eux de façon articulée via les goujons articulés (6), un premier segment d'étrier (2) terminal étant relié fixement au corps de serrure (1) et un deuxième segment d'étrier terminal de l'étrier pliant formant une tige de fermeture (3) pourvue au niveau de son extrémité d'étrier libre d'un élément de verrouillage (12) de façon à pouvoir pivoter vers l'intérieur pour interagir avec l'unité de mécanisme de fermeture (13) dans un logement de verrou (15) réalisé en côté au niveau du corps de serrure (1), le corps de serrure (1) et le premier segment d'étrier (2) terminal faisant partie intégrante d'une pièce brute de fonderie (7) et le corps de serrure (1) étant pourvu d'au moins un étai transversal formant une surface d'appui pour les segments d'étrier (5) de la boucle déployante dans une position de transport de la boucle déployante dans laquelle l'ensemble des segments d'étrier (5) s'étendent parallèlement les uns par rapport aux autres avec leurs axes longitudinaux, **caractérisé en ce que** l'élément de fixation (52) du côté de véhicule comporte une tête sphérique (51) et que l'élément de fixation (25) du côté de serrure comporte une partie de couplage (27) de type à logement sphérique déformable de façon élastique associée à une ouverture d'enfichage dans l'étai transversal du corps de serrure, ladite partie de couplage pouvant être reliée de façon amovible à une tête sphérique se fermant dans l'état verrouillé dans l'ouverture d'enfichage.

12. Dispositif de fixation selon la revendication 11, **caractérisé en ce que** la boucle déployante est réalisée selon l'une quelconque des revendications 2 à 10.

13. Boucle déployante selon la revendication 10 ou dispositif de fixation selon la revendication 11, **caractérisés en ce que** deux parties de couplage sont prévues du côté de serrure et que deux têtes sphériques sont prévues du côté du véhicule.

14. Boucle déployante selon la revendication 13 ou dispositif de fixation selon la revendication 13, **caractérisés en ce que** les têtes sphériques peuvent être vissées à l'aide de tiges filetées respectivement intégralement reliées aux têtes sphériques dans les alésages filetés, au niveau d'un cadre de deux-roues.
